# EUROPEAN PATENT APPLICATION

(11) **EP 4 825 515 A1**
(43) Date of publication of application: **21.10.2026**
(21) Application number: 24912261.5
(22) Date of filing: 05.12.2024
(51) Int. Cl.: B23K 1/08

(54) **JET SOLDER DEVICE**

(30) Priority: 25.12.2023 JP 2023217955
(71) Applicant: Senju Metal Industry Co., Ltd., Tokyo 120-8555 (JP)
(72) Inventor: SHINOHARA, Katsuhiro, Tokyo 120-8555 (JP); KAGAYA, Tomotake, Tokyo 120-8555 (JP); KURAMOTO, Kyoko, Tokyo 120-8555 (JP)
(74) Representative: Hindles Limited
(86) International application number: PCT/JP2024/042968
(87) International publication number: WO 2025/142371

(57) **Abstract**

A jet soldering apparatus has a storage tank 110 that stores molten solder S, a supply part 120, 130 for supplying molten solder S and a guide member 150 for guiding the molten solder S supplied from the supply part 120, 130 to the molten solder S in the storage tank 110. The guide member is immersed at an angle of 40 degrees or less with respect to liquid surface of the molten solder S.

## Description

### [TECHNICAL FIELD]

The present invention relates to a jet soldering apparatus that supplies molten solder to a substrate.

### [BACKGROUND ART]

Conventionally, a jet soldering apparatus for supplying molten solder to a substrate has been known. For example, JP 2011-124453 A discloses a jet solder tank for soldering an object by jetting molten solder from a jet nozzle provided in a solder tank main body part that accommodates the molten solder. The jet solder tank of JP 2011-124453 A includes: a solder guide part that has an outflow port at one end, is provided around a jet nozzle, causes the molten solder jetted by the jet nozzle to flow out from the outflow port, and guides the molten solder to the solder tank main body part; and a solder flow mitigation part that has a first basket having an open upper part and having a plurality of holes drilled in a bottom part and a side part, and a second basket provided below the first basket, having an open upper part, and having a plurality of holes drilled in a bottom part and a side part. The solder flow mitigation part is in an aspect in which the molten solder flowing out from the outflow port is taken in from the upper part of the first basket and is discharged from the holes of the first basket and the holes of the second basket.

### [SUMMARY OF INVENTION]

### [PROBLEM TO BE SOLVED BY INVENTION]

In an aspect of JP 2011-124453 A, an aspect is adopted in which the molten solder jetted by the jet nozzle is caused to flow out from the outflow port and guided to the solder tank main body part, but the present invention provides a jet soldering apparatus that can prevent scattering of molten solder to a substrate while adopting an aspect different from the aspect in JP 2011-124453 A.

### [MEANS FOR SOLVING PROBLEM]

### [Concept 1]

A jet soldering apparatus according to the first aspect of the present invention may comprise:
a supply part for supplying molten solder;
a storage tank that stores molten solder; and
a guide member for guiding the molten solder supplied from the supply part to the molten solder in the storage tank,
wherein the guide member may be immersed at an angle of 40 degrees or less with respect to liquid surface of the molten solder in the storage tank.

### [Concept 2]

In the jet soldering apparatus according to concept 1,
the guide member may have a first guide member located on a distal end side, a second guide member located on a proximal end side, and a guide bent part provided between the first guide member and the second guide member,
the first guide member may be immersed at an angle of 40 degrees or less with respect to the liquid surface of the molten solder in the storage tank, and
an angle of the second guide member with respect to the liquid surface of the molten solder in the storage tank may be larger than the angle of the first guide member with respect to the liquid surface of the molten solder in the storage tank.

### [Concept 3]

The jet soldering apparatus according to concept 1 or 2 may comprise a cover member located at least above a location where the guide member is immersed in the liquid surface of the molten solder in the storage tank.

### [Concept 4]

In the jet soldering apparatus according to concept 3,
the cover member may extend toward the supply part, and
a distal end of the cover member may be located closer to the supply part than a location where the guide member is immersed in the liquid surface of the molten solder in the storage tank.

### [Concept 5]

In the jet soldering apparatus according to concept 3 or 4,
the cover member may have a first cover member located on a distal end side, a second cover member located on a proximal end side, and a cover bent part provided between the first cover member and the second cover member,
the first cover member may be bent downward with respect to the second cover member via the cover bent part.

### [Concept 6]

In the jet soldering apparatus according to concept 5,
the guide member may have a first guide member located on a distal end side, a second guide member located on a proximal end side, and a guide bent part provided between the first guide member and the second guide member,
a distal end of the first cover member may be located closer to the supply part than the guide bent part.

### [Concept 7]

In the jet soldering apparatus according to any one of concepts 1 to 6,
the guide member may be immersed at an angle of more than 0 degrees with respect to the liquid surface of the molten solder in the storage tank.

### [Concept 8]

In the jet soldering apparatus according to any one of concepts 1 to 7,
the guide member may have a plurality of holes.

### [Concept 9]

A jet soldering apparatus according to the second aspect of the present invention may comprise:
a supply part for supplying molten solder;
a storage tank that stores molten solder; and
a guide member for guiding the molten solder supplied from the supply part to the molten solder in the storage tank,
wherein the guide member may have a first guide member located on a distal end side, a second guide member located on a proximal end side, and a guide bent part provided between the first guide member and the second guide member, and
wherein the first guide member may be immersed with respect to liquid surface of the molten solder in the storage tank.

### [Concept 10]

The jet soldering apparatus according to the second aspect may comprise a cover member provided above the molten solder in the storage tank and extending from a side surface of the storage tank toward a supply location of the molten solder of the supply part,
wherein the cover member may have a first cover member located on a distal end side, a second cover member located on a proximal end side, and a cover bent part provided between the first cover member and the second cover member, and
wherein an imaginary straight line connecting a landing position of the first guide member on the molten solder and a distal end of the first cover member may be positioned on a side surface of the supply part.

### [Concept 11]

A jet soldering apparatus according to the third aspect of the present invention may comprise:
a supply part for supplying molten solder;
a storage tank that stores molten solder; and
a cover member provided above the molten solder in the storage tank and extending from a side surface of the storage tank toward a supply location of the molten solder of the supply part,
wherein a distal end of the cover member and the supply location may be spaced apart from each other in a plan view.

### [Concept 12]

The jet soldering apparatus according to the third aspect of the present invention may comprise a guide member for guiding the molten solder supplied from the supply part to the molten solder in the storage tank,
wherein the guide member may be immersed at an angle of 40 degrees or less with respect to liquid surface of the molten solder in the storage tank, and
wherein an imaginary straight line connecting a landing position of the guide member on the molten solder and a distal end of the cover member may be positioned on a side surface of the supply part.

### [EFFECT OF INVENTION]

By adopting an aspect on the present invention, a jet soldering apparatus that can prevent scattering of molten solder to a substrate can be provided.

### [BRIEF DESCRIPTION OF FIGURES]

[FIG. 1] FIG. 1 is a schematic view showing a soldering apparatus according to the present embodiment.
[FIG. 2] FIG. 2 is a side sectional view showing an aspect in which an upstream guide member is immersed in a liquid surface of molten solder in a jet soldering apparatus according to the present embodiment.
[FIG. 3] FIG. 3 is a side sectional view showing an aspect in which an upstream guide member is immersed in a liquid surface of molten solder and an upstream cover member is provided, in a jet soldering apparatus according to the present embodiment.
[FIG. 4] FIG. 4 is a side sectional view showing an aspect in which an upstream guide member has an upstream first guide member, an upstream second guide member, and an upstream guide bent part, and an upstream cover member is provided, in a jet soldering apparatus according to the present embodiment.
[FIG. 5] FIG. 5 is a side sectional view showing an aspect in which an upstream guide member has an upstream first guide member, an upstream second guide member, and an upstream guide bent part, and an upstream cover member has an upstream first cover material, an upstream second cover member, and an upstream cover bent part, in a jet soldering apparatus according to the present embodiment.
[FIG. 6A] FIG. 6A is a perspective view of a guide member that can be used in the present embodiment.
[FIG. 6B] FIG. 6B is a side view of a guide member that can be used in the present embodiment.
[FIG. 7A] FIG. 7A is a perspective view of a guide member that can be used in the present embodiment and has a first guide member, a second guide member, and a guide bent part.
[FIG. 7B] FIG. 7B is a side view of a guide member that can be used in the present embodiment, that can be used in the present embodiment, and has a first guide member, a second guide member, and a guide bent part.
[FIG. 8] FIG. 8 is a plan view showing a soldering apparatus according to the present embodiment, in which a cover member is illustrated but a guide member is not illustrated.
[FIG. 9] FIG. 9 is a side sectional view showing an aspect in which an upstream guide member has an upstream first guide member, an upstream second guide member, and an upstream guide bent part, an upstream cover member has an upstream first cover material, an upstream second cover member, and an upstream cover bent part, and a downstream guide member and a downstream cover member are provided, in a jet soldering apparatus according to the present embodiment.
[FIG. 10] FIG. 10 is a side sectional view showing an aspect in which each of an upstream guide member and a downstream guide member has a first guide member, a second guide member, and a guide bent part, and each of an upstream cover member and a downstream cover member has a first cover material, a second cover member, and a cover bent part, in a jet soldering apparatus according to the present embodiment.
[FIG. 11] FIG. 11 is a side sectional view showing an example of the relationship between a landing position of a first guide member on molten solder and a distal end of a first cover material in a jet soldering apparatus according to the present embodiment.
[FIG. 12] FIG. 12 is a side sectional view schematically showing a guide member and a cover member in Example 1.
[FIG. 13] FIG. 13 is a side sectional view schematically showing a guide member and a cover member in Example 2.
[FIG. 14A] FIG. 14A is a photograph showing a scattering state of molten solder in a comparative example in which a guide member and a cover member are not provided.
[FIG. 14B] FIG. 14B is a photograph showing that molten solder was not scattered in Example 1.
[FIG. 14C] FIG. 14C is a photograph showing that molten solder was not scattered in Example 2.
[FIG. 15] FIG. 15 is a side sectional view showing an aspect in which a guide member is not provided and each of an upstream cover member and a downstream cover member is provided, in a jet soldering apparatus according to the present embodiment.
[FIG. 16] FIG. 16 is a side sectional view showing an aspect in which a guide member is not provided and each of an upstream cover member and a downstream cover member has a first cover material, a second cover member, and a cover bent part, in a jet soldering apparatus according to the present embodiment.

### [EMBODIMENT FOR IMPLEMENTING INVENTION]

### EMBODIMENT

### <<Configuration>>

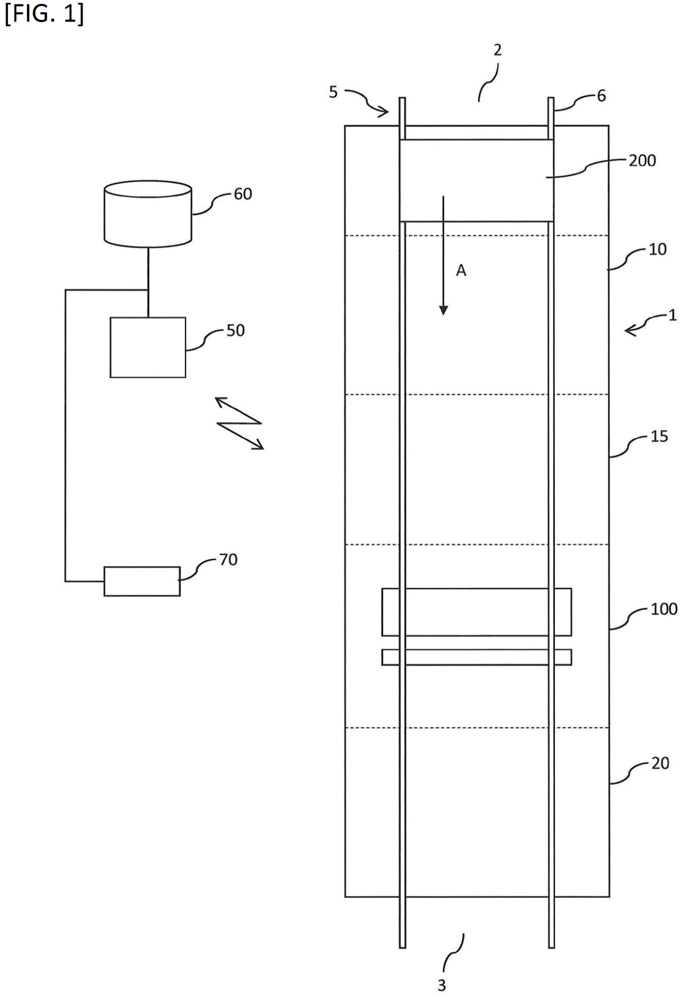

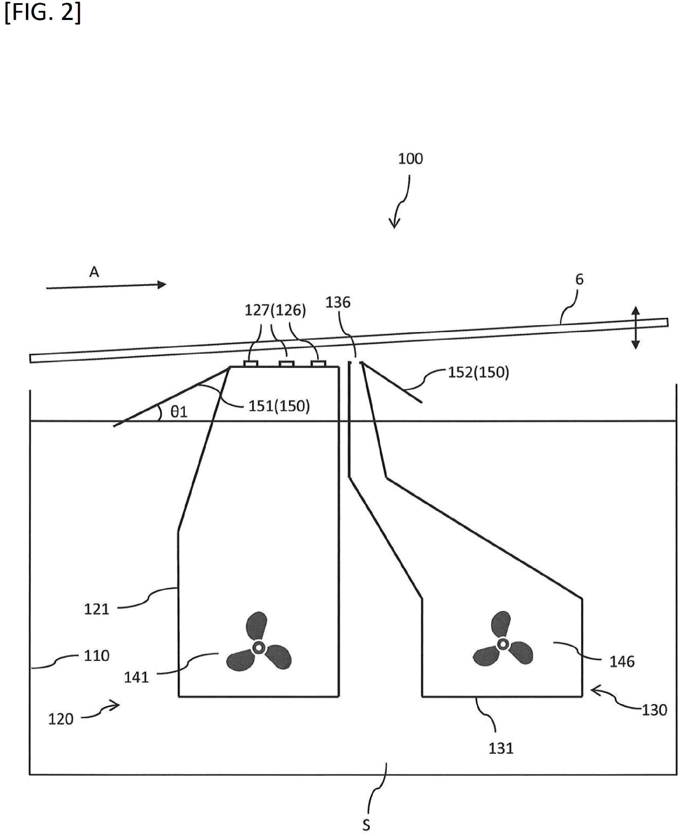

A soldering apparatus illustrated in FIG. 1 is an apparatus that performs soldering processing on a substrate 200 on which electronic components such as semiconductor elements, resistors, and capacitors are mounted on a circuit. Typically, the electronic components and the like are positioned on a lower side of the substrate 200. The soldering apparatus has a main body 1 and a conveyance unit 5 that conveys the substrate 200. The main body 1 has a carry-in port 2 through which the substrate 200 is carried in and a carry-out port 3 through which the substrate 200 is carried out. The substrate 200 may be conveyed at a predetermined angle, for example, an inclination of about 3 to 6 degrees when viewed from the side (see FIGS. 2 to 5 and FIGS 9 and 10). In this case, a downstream side is positioned at a higher position than an upstream side in a substrate conveyance direction A. However, the present invention is not limited thereto, and the substrate 200 may be horizontally conveyed, for example. The conveyance unit 5 may have a conveyance driver (not illustrated) that applies a driving force for transporting the substrate 200, and a conveyance rail 6 that guides the substrate 200.

As illustrated in FIG. 1, the main body 1 may be provided with a fluxer 10 for applying flux to the substrate 200, a preheater unit 15 for preheating the substrate 200 coated with flux, a jet soldering apparatus 100 for jetting molten solder into contact with the substrate 200, and a cooler 20 for cooling the soldered substrate 200. The substrate 200 conveyed along the conveyance rail 6 of the conveyance unit 5 sequentially passes through the fluxer 10, the preheater unit 15, the jet soldering apparatus 100, and the cooler 20. The jet soldering apparatus 100 may have a control unit 50 that gives a command to each component to control, a storage unit 60 that stores various pieces of information, and an operation unit 70 that an operator uses to operate the soldering apparatus by inputting various information. In FIG. 1, the soldering apparatus is illustrated in an upper plan view except for the control unit 50, the storage unit 60, and an operation unit 70.

The fluxer 10 is used to apply flux to the conveyed substrate 200. The flux may include a solvent, an activator, and the like. The fluxer 10 may be provided with a plurality of coating apparatuses. The type of flux may be selectively used according to the type of solder and the type of the substrate 200.

The preheater unit 15 heats the substrate 200 to uniformly raise the substrate 200 to a predetermined temperature. When the substrate 200 is heated in this manner, the solder is easily attached to a predetermined part of the substrate 200. For example, a far-infrared panel heater is used as the preheater unit 15. The far-infrared panel heater can rapidly heat the substrate 200 to a set temperature. Furthermore. The substrate 200 may be heated by blowing gas (hot air) heated by the heater onto the substrate 200 by a fan. Furthermore, as the preheater unit 15, a halogen heater or the like may be used.

The cooler 20 has a cooling fan which is not illustrated, and cools the substrate 200 soldered by the jet soldering apparatus 100. The control of the cooling fan may be only ON and OFF, but the wind speed may be adjusted. Furthermore, as the cooler 20, a chiller or the like may be used to cool the substrate 200 to a predetermined temperature.

The control unit 50 illustrated in FIG. 1 is communicably connected to the conveyance unit 5 including the conveyance rail 6, the fluxer 10, the preheater unit 15, the jet soldering apparatus 100, the cooler 20, the operation unit 70, and the storage unit 60. The communicable connections include both wired and wireless connections. The operation unit 70 may have a liquid crystal display panel, a numeric keypad, or the like, and is typically a personal computer, a smartphone, a tablet or the like. When an operator operates the operation unit 70, the control unit 50 may control a conveyance speed by the conveyance unit 5, a timing of conveying the substrate 200, a temperature of the flux at the fluxer 10, an application amount of the flux, a temperature of the preheater unit 15, a temperature of molten solder S of the jet soldering apparatus 100, a jet amount, a jet speed, ON and OFF of the cooling fan of the cooler 20, and the like. The storage unit 60 may store information input by the operation unit 70, an instruction of the control unit 50, an operating time of the jet soldering apparatus 100, and the like.

As illustrated in FIGS. 2 to 5, 9 and 10, the jet soldering apparatus 100 has a storage tank 110 that stores molten solder S, and a supply part 120, 130 that supplies the molten solder S to a substrate 200. In the present embodiment, the supply part 120, 130 has a first supply part 120 and a second supply part 130. The first supply part 120 may have a first pump 141 which is a first drive part. Similarly, the second supply part 130 may have a second pump 146 which is a second drive part. The molten solder S jetted from the first supply part 120 and the second supply part 130 is jetted upward from below. The molten solder S having received the driving force from the first pump 141 is pressure-fed in a duct and jetted toward the substrate 200 to attach the solder to a predetermined part of the substrate 200. Similarly, the molten solder S having received the driving force from the second pump 146 is pressure-fed in a duct and jetted toward the substrate 200 to attach the solder to a predetermined part of the substrate 200. The molten solder S is heated to a temperature of, for example, about 180°C. to 250°C. by a heater which is not illustrated. The molten solder S supplied from the first supply part 120 and the second supply part 130 may be circulated and used. In this case, it may be circulated through a filter which is not illustrated. Each of the first pump 141 and the second pump 146 is typically constituted of one pump, but each of the first pump 141 and the second pump 146 may be constituted of a plurality of pumps.

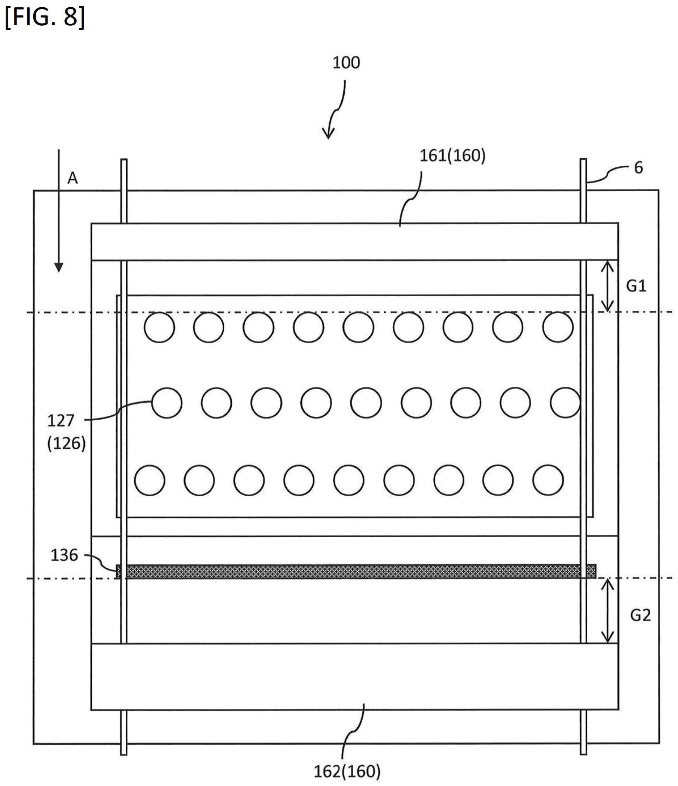

The first supply part 120 of the jet soldering apparatus 100 illustrated in FIGS. 2 to 5, 9 and 10 has a plurality of first openings 126 (see FIG. 8 etc.). The plurality of first openings 126 are used to vigorously supply a large amount of molten solder S to the substrate 200. A second opening 136 of the second supply part 130 is used to supply the molten solder S to the substrate 200 with weaker force than the first supply part 120. The jet solder supplied from the first supply part 120 is a dynamic supply for vigorously colliding the molten solder S against the substrate 200, and is a supply for spreading the molten solder S to every corner of the substrate 200. On the other hand, the jet solder supplied from the second supply part 130 is a static supply, and is a supply for cleanly attaching the solder to an electrode or the like of the substrate 200 by passing the jet solder through the molten solder S having a gentle flow.

As illustrated in FIGS. 2 to 5, 9 and 10, the first supply part 120 has a first housing 121, and one or a plurality of first openings 126 that are provided on an upper surface of the first housing 121 and supply the molten solder S. In the present embodiment, the first opening 126 has a nozzle shape that protrudes upward from an upper surface of the first housing 121. The second supply part 130 has a second housing 131, and one or a plurality of second openings 136 that are provided on an upper surface of the second housing 131 and supply the molten solder S. The first housing 121 and the second housing 131 may be provided apart from each other, but these may be provided integrally. In the present embodiment, description will be given using, as an example, the first opening 126, which has a plurality of nozzles 127, and one slit-shaped second opening 136 (see FIG. 8 etc.). However, there is no limitation to such an aspect, and for example, a plurality of slit-shaped second openings 136 may be provided, and in this case, the plurality of slit-shaped second openings 136 may be provided in an aspect of extending in parallel. The second opening 136 may also have a plurality of nozzles. In the present embodiment, the first opening 126 and the second opening 136 serve as supply locations of the molten solder S in the supply parts 120 and 130.

While the molten solder S is being supplied, the molten solder S supplied from the first supply part 120 and the molten solder S supplied from the second supply part 130 may be mixed with each other. A configuration may be adopted in which the molten solder S mixed in this manner does not separate from the substrate 200 conveyed by the conveyance unit 5 between the first supply part 120 and the second supply part 130. The substrate 200 is supported and conveyed by the conveyance rail 6, and the upper surface of the mixed molten solder S may not be positioned below the lower end of the conveyance rail 6 that conveys the substrate 200 when viewed from the side, in the entire length region along the substrate conveyance direction A between the first supply part 120 and the second supply part 130. In this case, a configuration is obtained in which the molten solder S does not separate from the substrate 200 conveyed by the conveyance unit 5 between the first supply part 120 and the second supply part 130.

An aspect may be adopted in which the molten solder S supplied from the first supply part 120 and the molten solder S supplied from the second supply part 130 merge with each other and are ejected to a position higher than the conveyance position of the substrate 200; however, there is no limitation to such an aspect, and an aspect may be adopted in which a location where the molten solder S does not contact the substrate 200 is provided between the molten solder S supplied from the first supply part 120 and the molten solder S supplied from the second supply part 130, and the molten solder S is ejected in two clearly separate stages.

A temperature of the molten solder S is generally a melting temperature of the solder +50°C. In recent years, there has been an increasing need to lower a working temperature in order to reduce damage to components and reduce mechanical power consumption. In addition, since the market price of Sn and Ag has soared, it has been examined to use solder that does not use Sn and Ag, and typically, it has been examined to use Sn-58Bi (melting point 139°C) instead of Sn-3Ag-0.5Cu (melting point 217°C). Sn-58Bi is a low-temperature eutectic solder. Note that, when Sn-58Bi is used, soldering can be performed at a temperature of 200°C. or lower. On the other hand, since Sn-58Bi has a small surface tension, the molten solder S supplied from the supply part has a high tendency to be scattered when the molten solder S falls onto the molten solder S stored in the storage tank. This tendency is observed with solder containing Bi, and becomes particularly remarkable with solder containing Bi at 35 mass% or more. Therefore, in solder containing Bi at 35 mass% or more, it is very advantageous to adopt the aspect of the present embodiment. In addition, since the tendency of the molten solder S to be scattered also becomes high when soldering is performed by the jet soldering apparatus 100 under an inert gas such as a nitrogen atmosphere, it is very advantageous to adopt the aspect of the present embodiment also under an inert gas such as a nitrogen atmosphere. Note that under an inert gas such as a nitrogen atmosphere, the molten solder S is considered to be likely to be scattered due to the fact that an oxide is not generated.

In the present embodiment, a guide member 150 for guiding the molten solder S supplied from the supply parts 120 and 130 to the molten solder S in the storage tank 110 is provided. In the present embodiment, the guide member 150 has an upstream guide member 151 located on an upstream side in the substrate conveyance direction A of the supply parts 120 and 130 and a downstream guide member 152 located on a downstream side in the substrate conveyance direction A of the supply parts 120 and 130, and at least one of these may be in an aspect of being immersed at an angle of more than 0 degrees and 40 degrees or less with respect to the liquid surface of the molten solder S in the storage tank 110. In a case where an angle θ1 of the guide member 150 with respect to the liquid surface of the molten solder S in the storage tank 110 exceeds 40 degrees (for example, in the case of 45 degrees), the molten solder S has a high tendency to be scattered when the molten solder S supplied from the supply parts 120 and 130 falls onto the molten solder S stored in the storage tank 110, and therefore it is advantageous that the angle θ1 of the guide member 150 with respect to the liquid surface of the molten solder S in the storage tank 110 is 40 degrees or less. The height position of the liquid surface of the molten solder S in the present embodiment is typically the height position of the liquid surface assumed in the design of the apparatus.

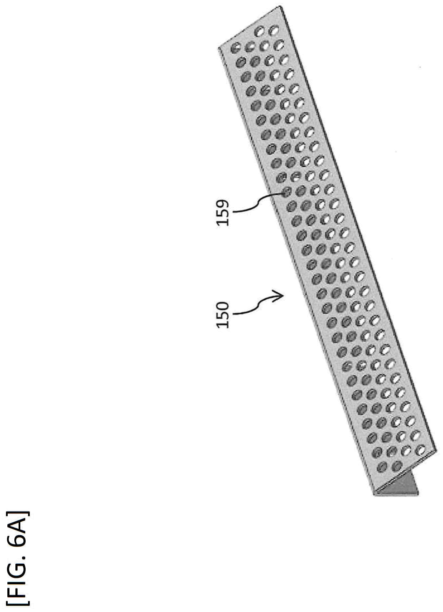

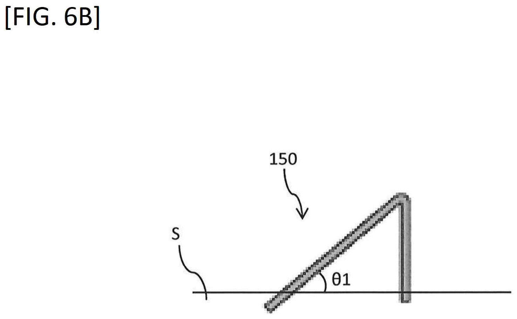

As shown in FIGS. 6A to 7B, the guide member 150 may have a plurality of holes 159. By providing such holes 159, the molten solder S falls from the holes 159, and while the molten solder is supplied to the substrate 200, the molten solder S basically continues to fall from the holes 159, and therefore a possibility that the molten solder S adheres to the substrate 200 due to scattering caused by the molten solder S falling through the holes 159 is low. On the other hand, by providing such holes 159, it is advantageous in that the molten solder S can be guided more smoothly to the molten solder S in the storage tank 110.

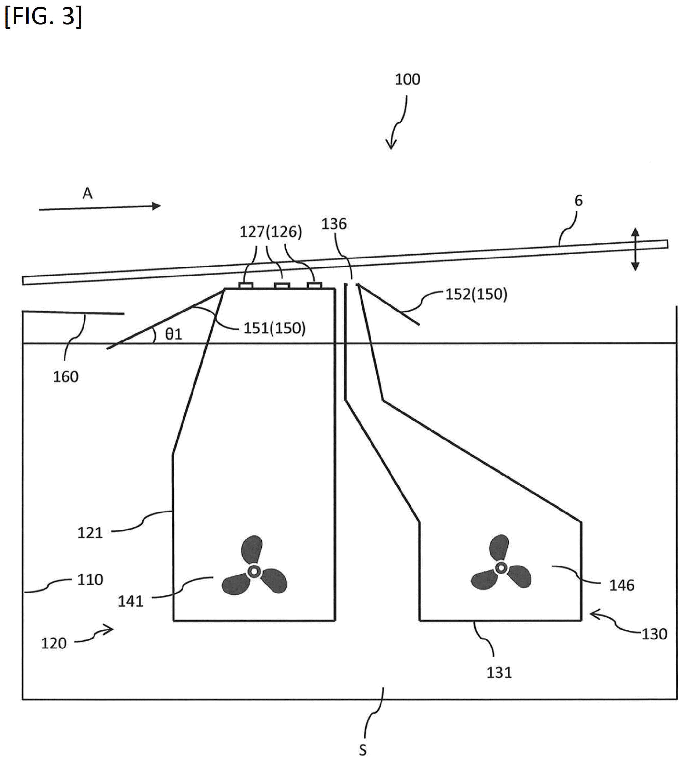

As shown in FIGS. 3 to 5, 9, and 10, a cover member 160 located at least above a location where the guide member 150 is immersed in the liquid surface of the molten solder S may be provided. Even in a case where the angle θ1 of the guide member 150 with respect to the liquid surface of the molten solder S in the storage tank 110 is 40 degrees or less, the molten solder S may be scattered when the molten solder S supplied from the supply parts 120 and 130 falls onto the molten solder S stored in the storage tank 110. Therefore, by providing the cover member 160 as in the present aspect, the scattered molten solder S can be prevented from adhering to the substrate 200. In particular, when the cover member 160 is provided at least above the location where the guide member 150 is immersed in the liquid surface of the molten solder S, an effect of preventing the scattered molten solder S from adhering to the substrate 200 can be enhanced.

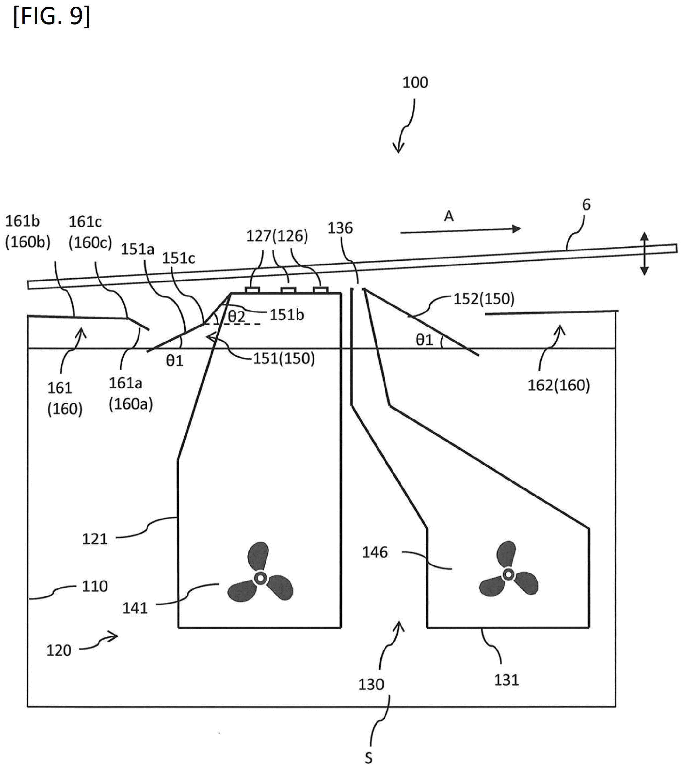

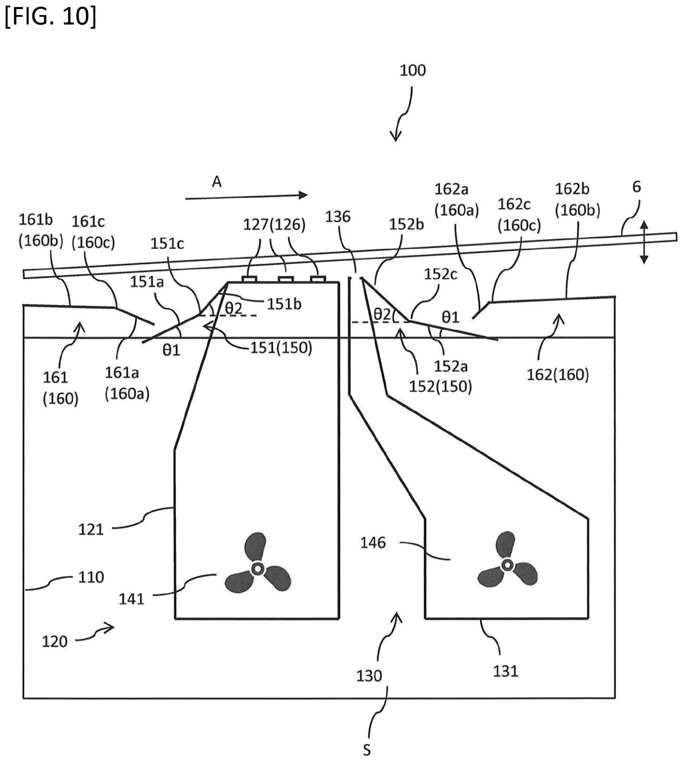

With respect to the supply parts 120 and 130, the guide member 150 that is immersed in the molten solder S and the cover member 160 may be provided on the upstream side in the substrate conveyance direction A, the guide member 150 that is immersed in the molten solder S and the cover member 160 may be provided on the downstream side in the substrate conveyance direction A, or with respect to the supply parts 120 and 130, the guide member 150 that is immersed in the molten solder S and the cover member 160 may be provided on both the upstream side and the downstream side in the substrate conveyance direction A. FIGS. 2 to 5 show an aspect in which, with respect to the supply parts 120 and 130, the upstream guide member 151 that is immersed in the molten solder S is provided on the upstream side in the substrate conveyance direction A, and FIGS. 9 and 10 show an aspect in which, with respect to the supply parts 120 and 130, the upstream guide member 151 and the downstream guide member 152 that are immersed in the molten solder S are respectively provided on the upstream side and the downstream side in the substrate conveyance direction A. In addition, FIGS. 3 to 5 show an aspect in which the cover member 160 has the upstream cover member 161 provided on the upstream side in the substrate conveyance direction A, and FIGS. 9 and 10 show an aspect in which the cover member 160 has the upstream cover member 161 provided on the upstream side in the substrate conveyance direction A and the downstream cover member 162 provided on the downstream side in the substrate conveyance direction A.

In a case where the conveyance position of the substrate 200 is positioned at a higher position on the downstream side than on the upstream side in the substrate conveyance direction A, scattering of the molten solder S on the upstream side in the substrate conveyance direction A with respect to the supply parts 120 and 130 is more likely to be problematic than scattering of the molten solder S on the downstream side in the substrate conveyance direction A with respect to the supply parts 120 and 130, and therefore it is advantageous that the upstream guide member 151 or the upstream cover member 161 is provided on the upstream side in the substrate conveyance direction A with respect to the supply parts 120 and 130.

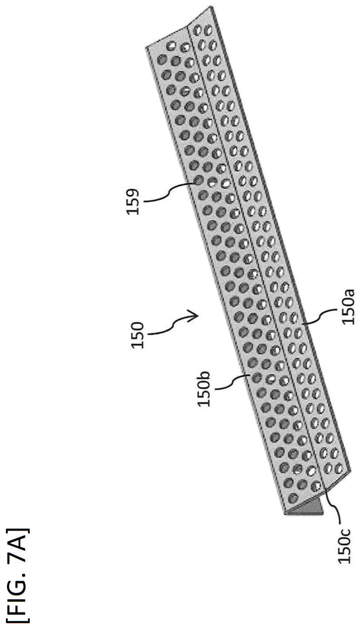

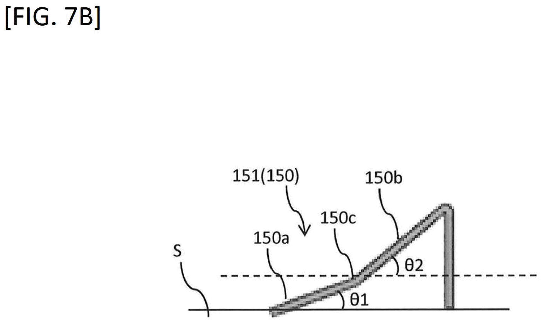

As shown in FIGS. 7A and 7B, the guide member 150 may have a first guide member 150a located on a distal end side, a second guide member 150b located on a proximal end side, and a guide bent part 150c provided between the first guide member 150a and the second guide member 150b. In a case where such an aspect is adopted, while the second guide member 150b prevents the molten solder S supplied from the supply parts 120 and 130 from stopping halfway, the first guide member 150a can suppress the molten solder S from being scattered when the molten solder S falls onto the molten solder S stored in the storage tank 110. Note that in a case where the guide member 150 is provided without providing the cover member 160, solder scattering can be suppressed by suppressing (adjusting) the angle of the guide member 150. On the other hand, in a case where the cover member 160 is provided together with the guide member 150, since a falling point of the molten solder S can be set in a lower region (a back side) of the cover member 160, solder scattering can be further prevented.

The first guide member 150a may be immersed at an angle of more than 0 degrees and 40 degrees or less with respect to the liquid surface of the molten solder S. An angle θ2 of the second guide member 150b with respect to the liquid surface of the molten solder S (basically a horizontal plane) may be larger than an angle θ1 of the first guide member 150a with respect to the liquid surface of the molten solder S (basically a horizontal plane). By providing such an angle restriction, while the second guide member 150b prevents the molten solder S supplied from the supply parts 120 and 130 from stopping halfway, an effect of suppressing the molten solder S from being scattered by the first guide member 150a when the molten solder S falls onto the molten solder S stored in the storage tank 110 can be further enhanced.

Note that since the second guide member 150b is not immersed in the molten solder S in the storage tank 110, the angle θ2 of the second guide member 150b with respect to the liquid surface of the molten solder S is an angle with respect to the liquid surface of the molten solder S in the storage tank 110 when the second guide member 150b is virtually extended. This angle is basically equal to an angle with respect to the horizontal plane.

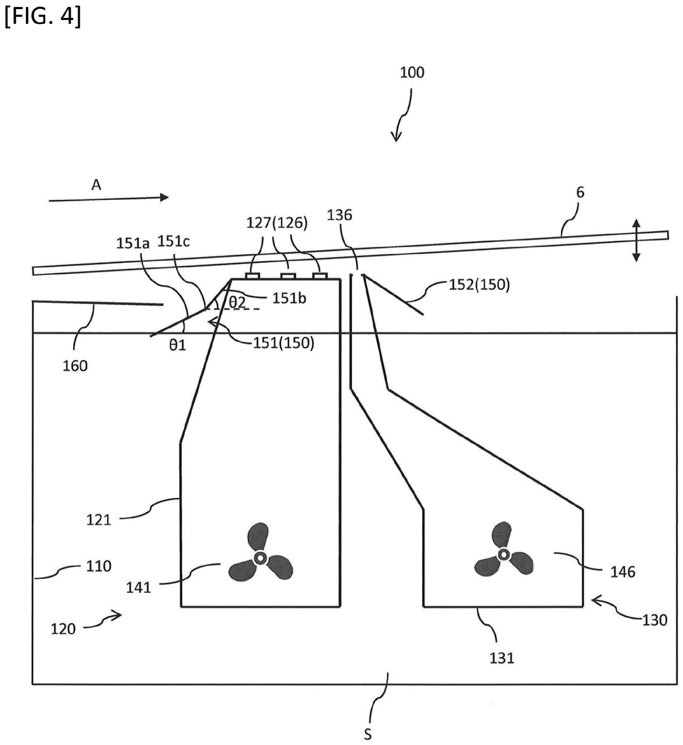

In the aspect shown in FIGS. 4, 5, and 9, the upstream guide member 151 has an upstream first guide member 151a located on a distal end side, an upstream second guide member 151b located on a proximal end side, and an upstream guide bent part 151c provided between the upstream first guide member 151a and the upstream second guide member 151b. In the aspect shown in FIG. 10, the upstream guide member 151 has an upstream first guide member 151a located on a distal end side, an upstream second guide member 151b located on a proximal end side, and an upstream guide bent part 151c provided between the upstream first guide member 151a and the upstream second guide member 151b, and the downstream guide member 152 has a downstream first guide member 152a located on a distal end side, a downstream second guide member 152b located on a proximal end side, and a downstream guide bent part 152c provided between the downstream first guide member 152a and the downstream second guide member 152b.

The cover member 160 may extend from a side surface of the storage tank 110 toward the supply parts 120 and 130. More specifically, the upstream cover member 161 may be provided to extend from a side surface of the storage tank 110 on the upstream side in the substrate conveyance direction A toward the downstream side in the substrate conveyance direction A where the supply parts 120 and 130 are located. Then, a distal end of the upstream cover member 161 may be located closer to the supply parts 120 and 130 (on the downstream side) than a location where the upstream guide member 151 is immersed in the liquid surface of the molten solder S. When the molten solder S guided by the upstream guide member 151 toward the upstream side in the substrate conveyance direction A falls onto the liquid surface, the molten solder S has a high tendency to be scattered toward the upstream side in the substrate conveyance direction A, and by providing the upstream cover member 161 from the side surface of the storage tank 110 toward the supply parts 120 and 130, an effect of preventing the scattered molten solder S from adhering to the substrate 200 can be further enhanced. Similarly, the downstream cover member 162 may be provided to extend from a side surface of the storage tank 110 on the downstream side in the substrate conveyance direction A toward the upstream side in the substrate conveyance direction A where the supply parts 120 and 130 are located. Then, a distal end of the downstream cover member 162 may be located closer to the supply parts 120 and 130 (on the upstream side) than a location where the downstream guide member 152 is immersed in the liquid surface of the molten solder S. When the molten solder S guided by the downstream guide member 152 toward the downstream side in the substrate conveyance direction A falls onto the liquid surface, the molten solder S has a high tendency to be scattered toward the downstream side in the substrate conveyance direction A, and by providing the downstream cover member 162 from the side surface of the storage tank 110 toward the supply parts 120 and 130, an effect of preventing the scattered molten solder S from adhering to the substrate 200 can be further enhanced.

Note that by adopting an aspect in which the cover member 160 is provided and the guide bent part 150c is provided, an angle of the first guide member 150a with respect to the horizontal plane can be made gentle, and a position where the first guide member 150a is in contact with the liquid surface of the molten solder S can be positioned closer to a proximal end side (a back side) of the cover member 160. Therefore, an effect of preventing the molten solder S from being scattered on the substrate 200 can be further enhanced.

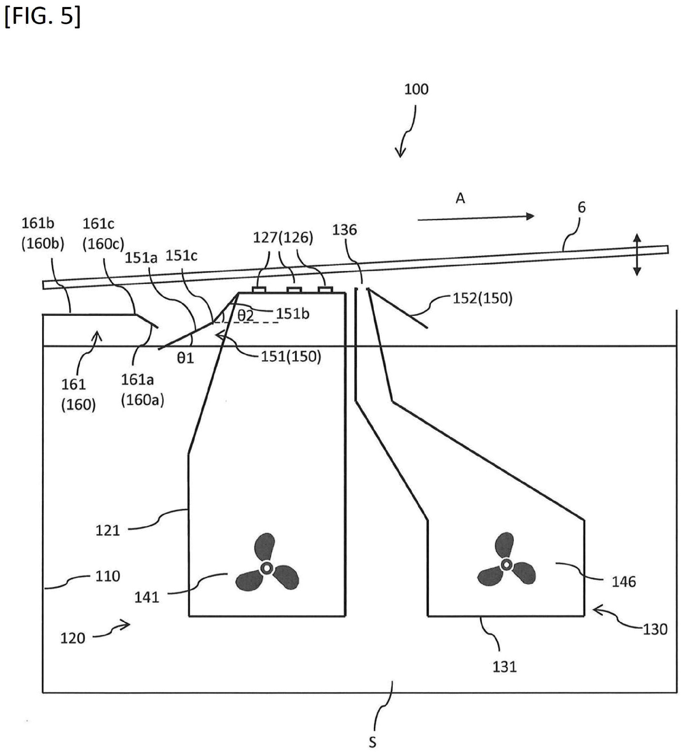

As shown in FIGS. 5, 9, and 10, the cover member 160 may have a first cover member 160a located on a distal end side, a second cover member 160b located on a proximal end side, and a cover bent part 160c provided between the first cover member 160a and the second cover member 160b. The first cover member 160a may be bent downward with respect to the second cover member 160b via the cover bent part 160c. By adopting such an aspect, an effect of preventing the molten solder S scattered when the molten solder S guided by the guide member 150 falls onto the liquid surface of the molten solder S from adhering to the substrate 200 can be further enhanced. In the upstream cover member 161 located on the upstream side, the upstream first cover member 161a is located on the downstream side in the substrate conveyance direction A (the right side in FIGS. 5, 9, and 10), and the upstream second cover member 161b is located on the upstream side in the substrate conveyance direction A (the left side in FIGS. 5, 9, and 10). On the other hand, in the downstream cover member 162 located on the downstream side, the downstream first cover member 162a is located on the upstream side in the substrate conveyance direction A, and the downstream second cover member 162b is located on the downstream side in the substrate conveyance direction A.

In the aspect shown in FIGS. 5 and 9, the upstream cover member 161 has an upstream first cover member 161a located on a distal end side, an upstream second cover member 161b located on a proximal end side, and an upstream cover bent part 161c provided between the upstream first cover member 161a and the upstream second cover member 161b. In the aspect shown in FIG. 10, the upstream cover member 161 has an upstream first cover member 161a located on a distal end side, an upstream second cover member 161b located on a proximal end side, and an upstream cover bent part 161c provided between the upstream first cover member 161a and the upstream second cover member 161b, and the downstream cover member 162 has a downstream first cover member 162a located on a distal end side, a downstream second cover member 162b located on a proximal end side, and a downstream cover bent part 162c provided between the downstream first cover member 162a and the downstream second cover member 162b.

In a case where the guide member 150 has a first guide member 150a located on a distal end side, a second guide member 150b located on a proximal end side, and a guide bent part 150c provided between the first guide member 150a and the second guide member 150b, a distal end of the first cover member 160a may be located closer to the supply parts 120 and 130 than the guide bent part 150c. By adopting such an aspect, a gap formed between the distal end of the first cover member 160a and the second guide member 150b can be made small, and an effect of preventing the molten solder S scattered when the molten solder S guided by the guide member 150 falls onto the liquid surface of the molten solder S from adhering to the substrate 200 can be further enhanced.

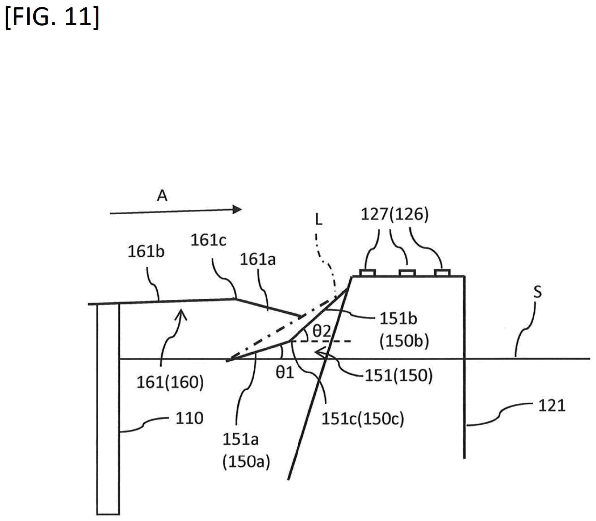

In addition, as shown in FIG. 11, an imaginary straight line L connecting a landing position of the first guide member 150a located on the distal end side on the molten solder S and a distal end of the first cover member 160a may be positioned on a side surface of the supply parts 120 and 130. FIG. 11 shows an aspect in which an imaginary straight line L connecting a landing position of the upstream first guide member 151a located on the distal end side on the molten solder S and a distal end of the upstream first cover member 161a is positioned so as to abut on a side surface of the first supply part 120.

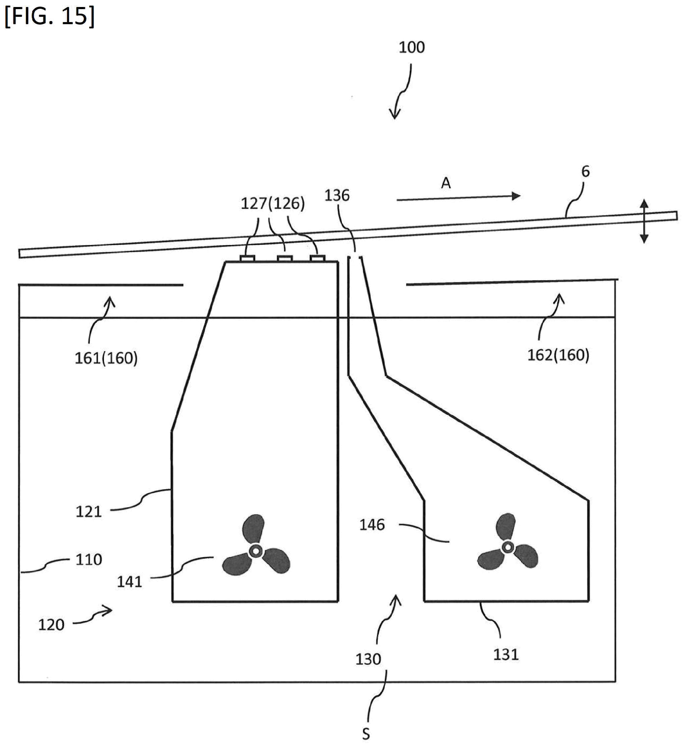

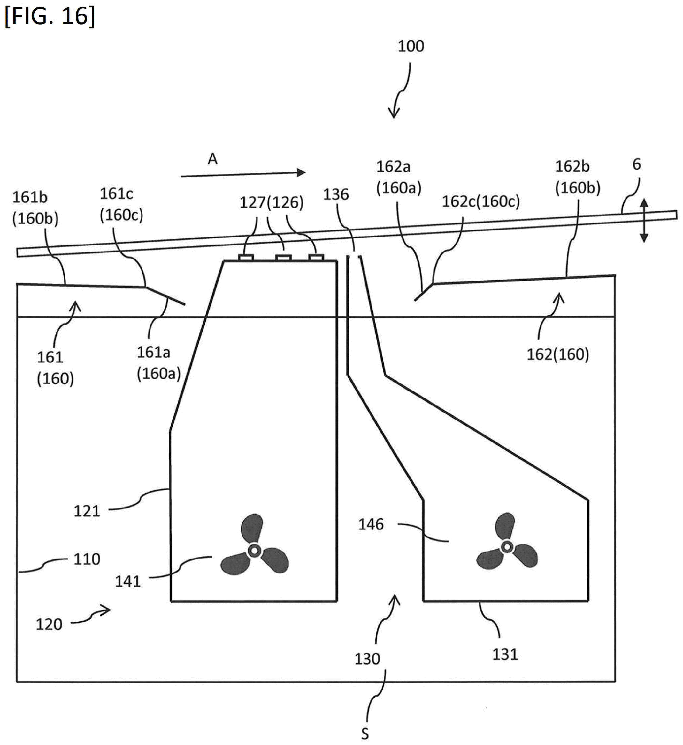

In the present embodiment, the description has been made mainly using an aspect in which the guide member 150 or both the guide member 150 and the cover member 160 are provided, but an aspect in which only one of the guide member 150 and the cover member 160 is provided can also be adopted, and as shown in FIGS. 15 and 16, an aspect in which the cover member 160 is provided and the guide member 150 is not provided can also be adopted. In a case where the guide member 150 is not provided, the molten solder S is scattered when the molten solder S supplied from the supply parts 120 and 130 falls onto the molten solder S in the storage tank 110, and by providing the cover member 160, the molten solder S can be prevented to some extent from adhering to the substrate 200.

In the present embodiment, a distal end of the cover member 160 and the first opening 126 and the second opening 136, which are supply locations of the molten solder S, are spaced apart from each other in plan view. More specifically, in plan view, the distal end of the upstream cover member 161 (the right end in FIGS. 3 to 5, 9, 10, 15, and 16) is spaced apart from the first opening 126 (see G1 in FIG. 8). In addition, in plan view, the distal end of the downstream cover member 162 (the left end in FIGS. 9, 10, 15, and 16) is spaced apart from the second opening 136 (see G2 in FIG. 8).

In order to promote separation of dross generated by oxidation of the solder, saccharides such as rice bran, wheat bran, barley bran, legumes, sesame, sunflower, palm, rapeseed, vegetable oil, and wood flour, as well as pine resin, ammonium chloride, halides of an amine, and the like, may be provided to the molten solder S as an oxidation separator.

Next, an example of a processing method of a substrate 200 will be described.

When an operator places the substrate 200 on the conveyance rail 6, the conveyance unit 5 conveys the substrate 200, and the substrate 200 is conveyed into the main body 1 from the carry-in port 2. When the substrate 200 reaches the fluxer 10, the fluxer 10 applies flux to a predetermined part of the substrate 200.

The conveyance unit 5 conveys the substrate 200 coated with the flux by the fluxer 10 to the preheater unit 15. The preheater unit 15 heats the substrate 200 to a predetermined temperature.

Next, the conveyance unit 5 conveys the substrate 200 heated to the predetermined temperature by the preheater unit to the jet soldering apparatus 100. The jet soldering apparatus 100 solders a predetermined part of the substrate 200. While the jet soldering apparatus 100 is supplying the molten solder S, the molten solder S supplied from the first supply part 120 and the molten solder S supplied from the second supply part 130 are mixed, and the molten solder S is supplied to above the conveyance rail 6. In this case, since the molten solder S supplied from the supply parts 120 and 130 is guided by the guide member 150 to the molten solder S in the storage tank 110, scattering of the molten solder S when the molten solder S supplied from the supply parts 120 and 130 lands on the molten solder S in the storage tank 110 can be prevented. In addition, by providing the cover member 160, even in a case where the molten solder S is scattered when the molten solder S supplied from the supply parts 120 and 130 lands on the molten solder S in the storage tank 110, the molten solder S can be prevented from adhering to the substrate.

Next, the conveyance unit 5 conveys the soldered substrate 200 to the cooler 20. For example, a cooling fan of the cooler 20 cools the soldered substrate 200 for a predetermined period of time. After the substrate 200 is cooled, when the conveyance unit 5 discharges the substrate 200 from the carry-out port 3, the soldering process for the substrate 200 is complete.

### [EXAMPLE]

Next, in order to confirm the effect of the present embodiment, the results of experiments conducted by the inventors of the present application will be described.

Soldering was performed under the following soldering conditions.

### (Soldering conditions)

Soldering apparatus: "BITHUS-Wave MTF-300" manufactured by Senju Metal Industry Co., Ltd.
Flux application apparatus: Spray fluxer ("SSF-400" manufactured by Senju Metal Industry Co., Ltd.)
Flux application amount: 70 mL/m²
Conveyor speed (conveying speed of conveyance unit 5): 1.2 m/min
Substrate temperature (average temperature): 120°C
Solder tank temperature: 199°C
Alloy composition of solder: Sn-58Bi

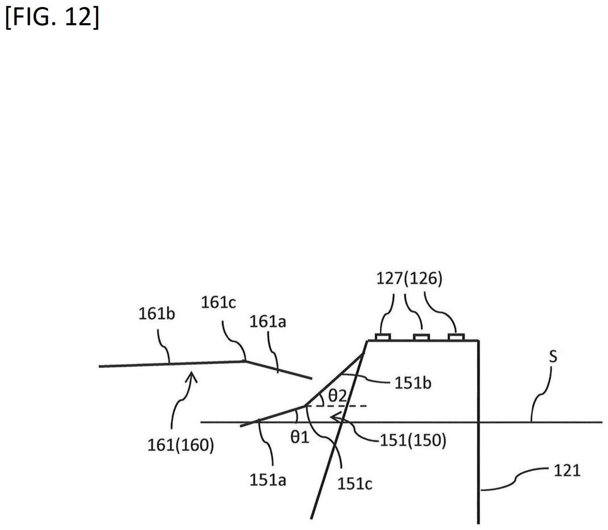

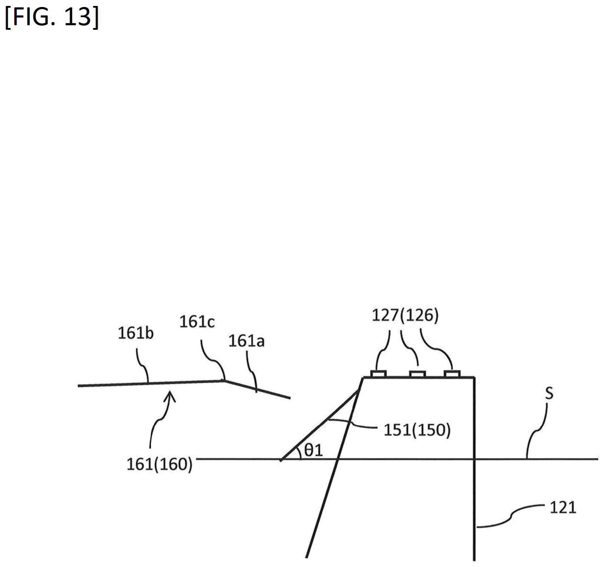

As Example 1, the aspect as shown in FIG. 12 was adopted. An angle (an angle with respect to the horizontal plane) θ2 of the second guide member 150b located on the proximal end side (the supply part side) with respect to the liquid surface of the molten solder S was set to 40 degrees, and an angle (an angle with respect to the horizontal plane) θ1 of the first guide member 150a located on the distal end side (the side opposite to the supply part) with respect to the liquid surface of the molten solder S was set to 20 degrees. As Example 2, the aspect as shown in FIG. 13 was adopted. The angle (the angle with respect to the horizontal plane) θ1 of the guide member 150 with respect to the liquid surface of the molten solder S was set to 40 degrees. In addition, as a comparative example, an aspect in which the guide member 150 and the cover member 160 were not provided was also adopted.

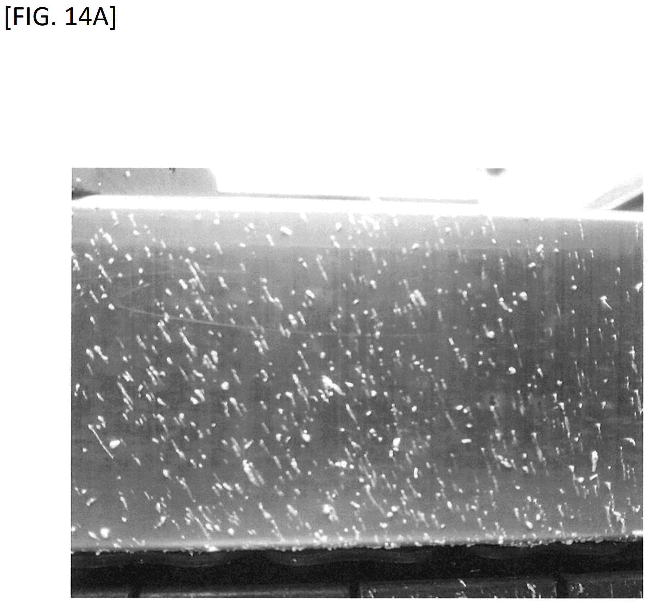

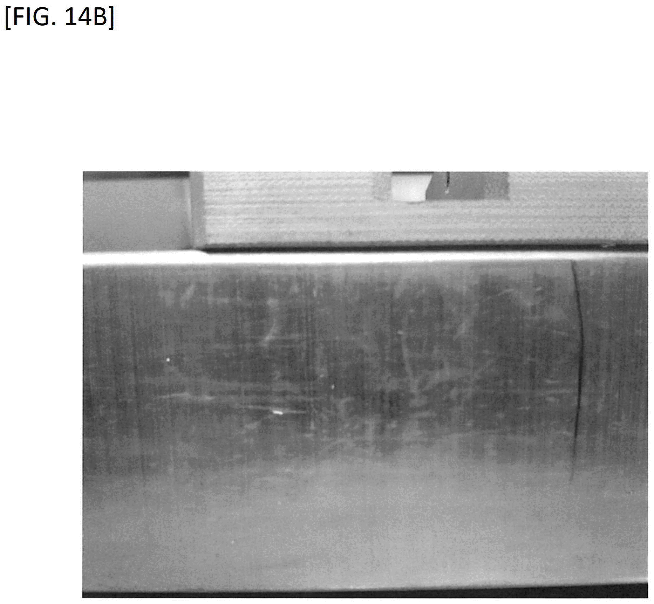

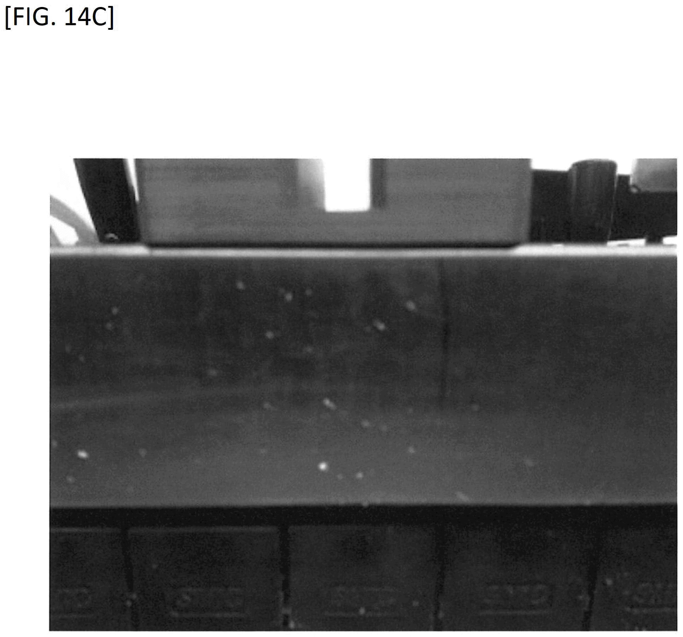

The soldering apparatus was operated for 2 hours under the above conditions. Thereafter, a state of scattering of the molten solder S adhering to a lower surface of a member installed at an upper position of the conveyance rail 6 was confirmed, and in the comparative example in which the guide member 150 and the cover member 160 were not provided, innumerable scattering occurred (see FIG. 14A). On the other hand, in the aspects of Examples 1 and 2, scattering of the molten solder S adhering to the lower surface of the member installed at the upper position of the conveyance rail 6 was slight (see FIGS. 14B and 14C). More specifically, in the aspect of Example 1, scattering of the molten solder S adhering to the lower surface of the member installed at the upper position of the conveyance rail 6 could hardly be confirmed (see FIG. 14B), and in the aspect of Example 2, slight scattering of the molten solder S could be confirmed on the lower surface of the member installed at the upper position of the conveyance rail 6 (see FIG. 14C). Therefore, it was confirmed that an advantageous effect can be obtained by adopting the aspect of the present embodiment, and in particular, it was confirmed that a very advantageous effect can be obtained by adopting an aspect in which θ1 < θ2 and the angle of θ1 is made small as in Example 1.

The above description of each embodiment and the disclosure of the drawings are merely examples for describing the invention defined in the claims, and the invention defined in the claims is not limited by the above description of each embodiment and the disclosure of the drawings. In addition, the description of the claims at the time of filing is only an example, and the description of the claims can be changed as appropriate based on the description of the description, drawings, and the like.

### [EXPLANATION OF REFERENCE]

- 110: Storage tank
- S: Molten solder
- 120: First supply part
- 130: Second supply part
- 150: Guide member
- 150a: First guide member
- 150b: Second guide member
- 150c: Guide bent part
- 160: Cover member
- 160a: First cover member
- 160b: Second cover member
- 160c: Cover bent part

## Claims

1. A jet soldering apparatus comprising:
a supply part for supplying molten solder;
a storage tank that stores molten solder; and
a guide member for guiding the molten solder supplied from the supply part to the molten solder in the storage tank,
wherein the guide member is immersed at an angle of 40 degrees or less with respect to liquid surface of the molten solder in the storage tank.

2. The jet soldering apparatus according to claim 1,
wherein the guide member has a first guide member located on a distal end side, a second guide member located on a proximal end side, and a guide bent part provided between the first guide member and the second guide member,
wherein the first guide member is immersed at an angle of 40 degrees or less with respect to the liquid surface of the molten solder in the storage tank, and
wherein an angle of the second guide member with respect to the liquid surface of the molten solder in the storage tank is larger than the angle of the first guide member with respect to the liquid surface of the molten solder in the storage tank.

3. The jet soldering apparatus according to claim 1 or 2 comprising a cover member located at least above a location where the guide member is immersed in the liquid surface of the molten solder in the storage tank.

4. The jet soldering apparatus according to claim 3,
wherein the cover member extends toward the supply part, and
wherein a distal end of the cover member is located closer to the supply part than a location where the guide member is immersed in the liquid surface of the molten solder in the storage tank.

5. The jet soldering apparatus according to claim 3,
wherein the cover member has a first cover member located on a distal end side, a second cover member located on a proximal end side, and a cover bent part provided between the first cover member and the second cover member,
wherein the first cover member is bent downward with respect to the second cover member via the cover bent part.

6. The jet soldering apparatus according to claim 5,
wherein the guide member has a first guide member located on a distal end side, a second guide member located on a proximal end side, and a guide bent part provided between the first guide member and the second guide member,
wherein a distal end of the first cover member is located closer to the supply part than the guide bent part.

7. The jet soldering apparatus according to claim 1 or 2,
wherein the guide member is immersed at an angle of more than 0 degrees with respect to the liquid surface of the molten solder in the storage tank.

8. The jet soldering apparatus according to claim 1 or 2,
Wherein the guide member has a plurality of holes.

9. A jet soldering apparatus comprising:
a supply part for supplying molten solder;
a storage tank that stores molten solder; and
a guide member for guiding the molten solder supplied from the supply part to the molten solder in the storage tank,
wherein the guide member has a first guide member located on a distal end side, a second guide member located on a proximal end side, and a guide bent part provided between the first guide member and the second guide member, and
wherein the first guide member is immersed with respect to liquid surface of the molten solder in the storage tank.

10. The jet soldering apparatus according to claim 9 comprising a cover member provided above the molten solder in the storage tank and extending from a side surface of the storage tank toward a supply location of the molten solder of the supply part,
wherein the cover member has a first cover member located on a distal end side, a second cover member located on a proximal end side, and a cover bent part provided between the first cover member and the second cover member, and
wherein an imaginary straight line connecting a landing position of the first guide member on the molten solder and a distal end of the first cover member is positioned on a side surface of the supply part.

11. A jet soldering apparatus comprising:
a supply part for supplying molten solder;
a storage tank that stores molten solder; and
a cover member provided above the molten solder in the storage tank and extending from a side surface of the storage tank toward a supply location of the molten solder of the supply part,
wherein a distal end of the cover member and the supply location are spaced apart from each other in a plan view.

12. The jet soldering apparatus according to claim 11 comprising a guide member for guiding the molten solder supplied from the supply part to the molten solder in the storage tank,
wherein the guide member is immersed at an angle of 40 degrees or less with respect to liquid surface of the molten solder in the storage tank, and
wherein an imaginary straight line connecting a landing position of the guide member on the molten solder and a distal end of the cover member is positioned on a side surface of the supply part.
